# EUROPÄISCHE PATENTSCHRIFT

(11) **EP 1 345 395 B1**
(45) Veröffentlichungstag und Bekanntmachung des Hinweises auf die Patenterteilung: **08.05.2013**
(21) Anmeldenummer: 02360089.3
(22) Anmeldetag: 15.03.2002
(51) Int. Cl.: H04M 3/22, H04M 7/00

(54) **Verfahren zum Abhören von Kommunikationsverbindungen**
Method for intercepting communication connections
Méthode pour intercepter des connexions de communication

(43) Veröffentlichungstag der Anmeldung: 17.09.2003
(73) Patentinhaber: Alcatel Lucent, 75007 Paris (FR)
(72) Erfinder: Lautenschlager, Wolfgang, 71287 Weissach-Flacht (DE); Stah, Uwe, 61229 Leonberg (DE)
(74) Vertreter: Wetzel, Emmanuelle

(56) Entgegenhaltungen:
- EP-A- 1 111 892
- WO-A-01/89145
- WO-A-02/17036
- WO-A-99/55062
- ETSI: "Telecommunications security; Lawful Interception (LI); Issues on IP Interception " ETSI TR 101 944 V1.1.1, 14. Juni 2001 (2001-06-14), Seiten 1-19, XP002212721

## Beschreibung

Die Erfindung betrifft ein Verfahren zum Abhören von Kommunikationsverbindungen zwischen zwei und mehr Teilnehmern eines Kommunikationsnetzes, das ein oder mehrere IP-Netze aufweist. Die Erfindung betrifft weiter einen Abhörserver zur Unterstützung des Abhörens von Kommunikationsverbindungen zwischen zwei und mehr Teilnehmern eines Kommunikationsnetzes sowie einen Verbindungssteuerungs-Server für Kommunikationsverbindungen und einem IP-Router zur Durchführung des Verfahrens.

Nationale und internationale Gesetze fordern von Betreibern eines Kommunikationsnetzes, innerhalb des Kommunikationsnetzes Mechanismen vorzusehen, die es Bedarfsträgern (Polizei, Geheimdienste, ...) ermöglichen, den Fernsprechverkehr verdächtiger Personen zu überwachen.

Die Erfindung geht nun von der Art und Weise aus, wie dieses Problem innerhalb eines klassischen Fernsprechnetzes gelöst ist:

In der lokalen Vermittlungsstelle des zu überwachenden Teilnehmers wird der Teilnehmerdatensatz des zu überwachenden Teilnehmers gekennzeichnet und eine Art Konferenzschaltung zum Bedarfsträger eingerichtet. Die für den jeweiligen Abhörvorgang grundsätzlich zu ermittelnden Daten werden von der Vermittiungssteüe mittels Zugriff auf eine Bedorfströgerdatenbank ermittelt, die Teil der Vermittlungsstelle ist. Der gesamte Abhörmechanismus ist somit Teil der Vermittlungsstelle.

Es besteht nun das Problem, dass zunehmend die technischen Möglichkeiten bestehen, Fernsprechverbiridungen ganz oder teilweise als VOIP Kommünikationsverbindungen (VOIP = Voice over IP; IP = Internet Protocol) durch Kommunikatiöhsnetze zu führen. Ein solches Verfahren wird in der Veröffentlichung der Internationalen Patentanmeldung mit der Nummer WO 01/89145 A1 beschrieben. Dort ist ein Verfahren offenbart, bei dem ein Ruf mit einem mobilen Terminal über ein IP-Netz übertragen wird, wobei das IP-Netz einen sogenannten Gatekeeper aufweist. Dieser Gatekeeper veranlasst einen dem mobilen Terminal zugewiesenen Zugangs-Router seinen Verkehr zu überwachen und alle Pakete, die mit dem mobilen Terminal in Beziehung stehen, zu einer Überwachungs-Einrichtung weiter zu leiten.

Die Internationalen Patentanmeldung mit der Veröffentlichungsnummer WO 99/55062 offenbart eine Abhörvorrichtung basierend auf einem Intelligenten Netzwerk das ein Vermittlungsnetzwerk steuert.

Die Europäische Patentanmeldung mit der Veröffentlichungsnummer EP 1 111 892 A1 offenbart ein System und ein Verfahren zur Überwachung eines IP-Netzes.

Der Erfindung lieg die Aufgabe zugrunde, das Abhören von Kommunikationsverbindungen auch effizient ohne großen Signalisierungsaufwand zu gewährleisten, selbst wenn das Kommunikationsnetz, über das die Kommunikationsverbindungen geführt werden, ein oder mehrere IP-Netze aufweist.

Diese Aufgabe wird gelöst durch ein Verfahren zum Abhören von Kommunikationsverbindungen zwischen zwei und mehr Teilnehmern eines Kommunikationsnetzes nach den Lehre von Anspruch 1. Diese Aufgabe wird weiter gelöst durch einen Abhörserver zur Unterstützung des Abhörens von Kommunikationsverbindungen zwischen zwei und mehr Teilnehmern eines Kommunikationsnetzes nach den Lehre von Anspruch 9. Diese Aufgabe wird weiter gelöst durch einen Verbindungssteuerungs-Server für Kommunikationsverbindungen nach der Lehre von Anspruch 11. Diese Aufgabe wird weiter gelöst durch einen IP-Router nach der Lehre von Anspruch 13.

Der Erfindung liegt der Gedanke zugrunde, Verbindungsdaten über die abzuhörenden Kommunikationsverbindungen mittels ein oder mehrerer Verbindungssteuerungs-Server zu gewinnen und Inhaltsdaten über abzuhörende Kommunikationsverbindungen mittels eines IP-Routers oder mehrerer IP-router zu gewinnen, die jeweils für einen Netzzugangspunkt des Teilnehmers zu dem IP-Netz oder zu einem der IP-Netze verantwortlich sind.

Der Vorteil der Erfindung besteht darin, dass hierdurch eine vollständige Überwachung von Fernsprechverbindungen ermöglicht wird, die ganz oder teilweise über ein oder mehrere IP-Netze geführt werden. Die Art der Gewinnung ist hierbei besonders effektiv und kommt mit geringen Ressourcenaufwand aus. Weiter kann die Erfindung auf einfache Weise in bereits existierende Netzstrukturen integriert werden.

Ein weiterer Vorteil besteht darin, dass die Durchführung der Abhörung mittels des erfindungsgemäßen Verfahrens vollständig transparent für den überwachten Teilnehmer ist. Dieser hat somit keine Möglichkeit, von der Überwachung Kenntnis zu erlangen.

Vorteilhafte Ausgestaltungen der Erfindung sind den Unteransprüchen zu entnehmen.

Im folgenden wir nun die Erfindung anhand von mehreren Ausführungsbeispielen unter Zuhilfenahme der beiliegenden Zeichnungen beispielhaft erläutert.
- Fig. 1: zeigt ein Blockschaltbild eines Kommunikationsnetzes mit einem erfindungsgemäßen Abhörserver, mit mehreren erfindungsgemäßen Verbindungssteuerungs-Servern und mit mehreren erfindungsgemäßen IP-Routern für ein erstes Ausführungsbeispiel.
- Fig. 2: zeigt ein Blockschaltbild eines Ausschnitts aus einem Kommunikationsnetz mit einem erfindungsgemäßen Verbindungsstouerungs-Server und mit mehreren erfindungsgemäßen IP-Routern für ein zweites Ausführungsbeispiel.
- Fig. 3: zeigt eine funktionelle Darstellung eines Ausschnitts aus dem Kommunikationsnetz nach Fig. 1 mit einem erfindungsgemäßen Abhörserver, mit mehreren erfindungsgemäßen Verbindungssteuerungs-Servern und mit mehreren erfindungsgemäßen IP-Routern.

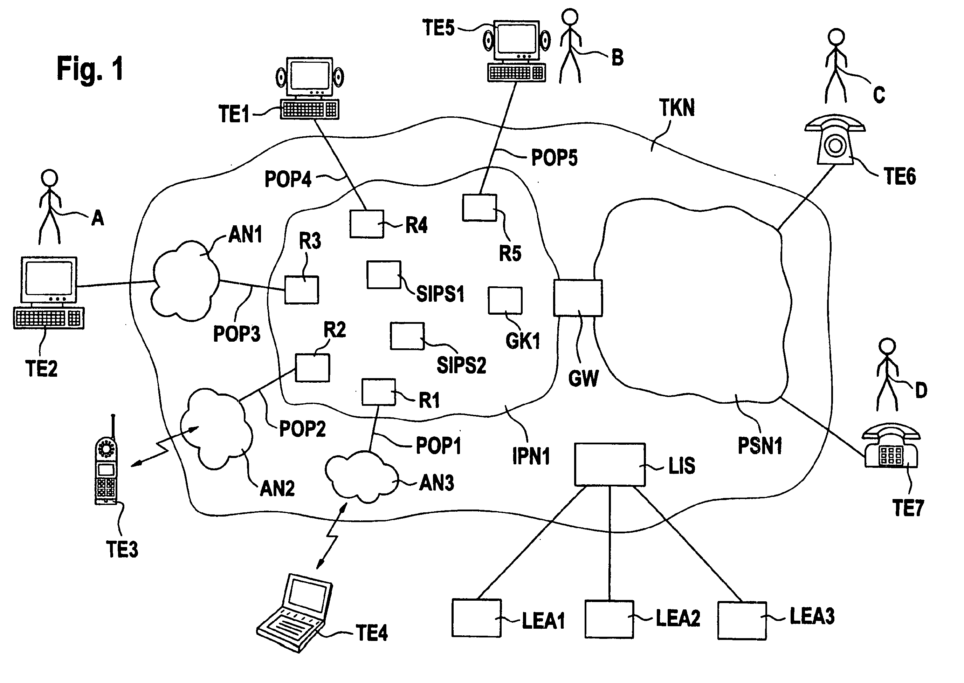

Fig. 1 zeigt ein Kommunikationsnetz TKN, mehrere Endgeräte TE1 bis TE7 und drei Server LEA1 bis LEA3.

Bei dem Kommunikationsnetz TKN handelt es sich um ein Kommunikationsnetz, über das Sprachverbindungen geführt werden können. Es ist jedoch auch möglich, dass über das Kommunikationsnetz TKN zusätzlich oder alternativ Daten- und Video-Verbindungen geführt werden können oder Daten verbindungslos übertragen werden können. Das Kommunikationsnetz TKN besteht vorzugsweise aus einem oder mehreren Fernsprechnetzen, die auch unterschiedlichen Netzbetreibern zugeordnet sein können. Weiter verfügt das Kommunikationsnetz TKN über ein oder mehrere IP-Netze (IP = Internet Protocol). Weiter kann das Kommunikationsnetz TKN über ein oder mehrere Zugangsnetze verfügen, über die Endgeräte von Teilnehmern Zugang zu einem der oben genannten Netze des Kommunikationsnetzes TKN erlangen können.

Von den Teilnetzen des Kommunikationsnetzes TKN sind in Fig. 1 beispielhaft ein Fernsprechnetz PSN1, ein IP-Netz IPN1 und drei Zugangsnetze AN1 bis AN3 gezeigt, über die ein Netzzugang zu dem IP-Netz IPN1 möglich ist. Das Fernsprechnetz PSN1 ist eine PSTN- oder ISDN-Netz (PSTN = Public Switch Telecommunication Network, ISDN = Integrated Services Digital Network). Das Fernsprechnetz PSN1 verfügt über ein oder mehrere Vermittlungsstellen, die Fernsprechverbindungen zwischen Endgeräten des Fernsprechnetzes PSN1 und auch Netzübergänge zu anderen Teilnetzen des Kommunikationsnetzes TKN aufbauen.

Das IP-Netz IPN1 ist ein Datennetz, das zur Übertragung der Daten als Schicht 3-Protokoll ein IP-Protokoll verwendet. Vorzugsweise wird hierfür der TCP/IP-Protokollstack (TCP = Transmission Control Protocol) verwendet. Als Schicht 2-Protokolle oder MAC-Protokolle (MAC = Medium Access Protocol) können in dem IP-Netz IPN1 eine Vielzahl unterschiedlicher Protokolle verwendet werden. Beispielsweise ist es möglich Ethernet, DQDB und/ oder ATM-Protokolle (DQDB = Distributed Queue Dual Bus, ATM = Asynchronous Transfer Mode) zu verwenden. Das IP-Netz IPN1 weist eine Vielzahl von IP-Routern auf, die Datenpakete auf der IP-Ebene vermitteln. Bei dem IP-Netz IPN1 kann es sich um das Internet handeln. Es ist jedoch auch möglich, dass es sich bei dem IP-Netz IPN1 um das Netz eines bestimmen Netzbetreibers handelt.

Die Zugangsnetze AN1 bis AN3 ermöglichen es den Endgeräten TE2 bis TE4 Zugang zu dem IP-Netz IPN1 zu erlangen. Bei dem Zugangsnetz AN1 handelt es sich um ein Fernsprechnetz. Durch dieses Fernsprechnetz wird zwischen dem Endgerät TE2 und einem Netzzugangspunkt zu dem IP-Netz IPN1 eine Fernsprechverbindung aufgebaut, über die Daten beispielsweise mittels eines Modems übermittelt werden. Bei dem Zugangsnetz AN2 handelt es sich um ein Mobilfunknetz, beispielsweise nach dem GSM oder UMTS Standard (GSM = Global System for Mobile Communication, UMTS = Universal Mobile Telecommunications System). Bei dem Zugangsnetz AN3 handelt es sich um ein Wireless-LAN (LAN = Local Area Network).

Bei den Endgeräten TE1 bis TE7 handelt es sich um Endgeräte, mittels denen eine Sprachkommunikation über das Kommunikationsnetz TKN möglich ist. Bei dem Endgerät TE1 handelt es sich um ein VOIP-Telefon. Das Endgerät TE1 ist hierbei direkt über einen Netzzugangspunkt POP4 mit dem IP-Netz IPN1 verbunden. Bei dem Endgerät TE2 handelt es sich um einen Computer mit einer VOIP-Software und peripheren Komponenten, mittels denen es ihm zum einen möglich ist, über das Zugangsnetz AN1 mit dem IP-Netz IPN1 zu kommunizieren, und zum anderen möglich ist, Sprachsignale von einem Teilnehmer zu empfangen und an einen Teilnehmer zu senden. Das Endgerät TE2 weist somit hardwaremäßig einen Lautsprecher, ein Mikrophon und eine ISDN-Karte oder ein Analogmodem auf.

Bei dem Endgerät TE3 handelt es sich um ein UMTS oder GSM Endgerät.

Bei dem Endgerät TE4 handelt es sich um einen Computer, der mit einer Schnittstellenkarte zur Bearbeitung des Wireless-LAN-Protokolls des Zugangsnetzes AN3 ausgestattet ist. Auch das Endgerät TE4 verfügt wie das Endgerät TE2 weiter über periphere Einheiten, die eine Sprachkommunikation mit einem Teilnehmer ermöglichen.

Das Endgerät TE5 ist wie das Endgerät TE1 ausgestaltet. Die Endgeräte TE6 und TE7 sind Fernsprechendgeräte, die mit einem PSTN- oder ISDN-Netz verbindbar sind.

Die Endgeräte TE1 bis TE4 sind einem Teilnehmer A zugeordnet. Zugeordnet bedeutet hierbei, dass diese Endgeräte von dem Teilnehmer A zur Kommunikation verwendet werden können. Die Zuordnung erfolgt hierbei bei den Endgeräten TE1 und TE2 über die physikalische Adresse des Netzanschlusses und bei den Endgeräten TE3 und TE4 über eine dem Teilnehmer zugeordnete Benutzerkennung.

Das Endgerät TE5 ist einem Teilnehmer B zugeordnet. Die Endgeräte TE6 und TE7 sind einem Teilnehmer C bzw. einem Teilnehmer D zugeordnet.

Von den Netzelementen des IP-Netzes IPN1 sind in Fig. 1 beispielhaft fünf IP-Router R1 bis R5, drei Verbindungssteuerungs-Server SIPS1, SIPS2 und GK1 gezeigt. Weiter ist in Fig. 1 eine Gateway GW gezeigt, das zwischen dem IP-Netz IPN1 und dem Fernsprechnetz PSN1 angeordnet ist.

Über die IP-Router R1 bis R5 ist jeweils ein Netzzugang zu dem IP-Netz IPN1 möglich. Die IP-Router R1, R2 und R3 sind über Netzzugangspunkte POP1, POP2 bzw. POP3 mit den Zugangsnetzen AN3, AN2 bzw. AN1 verbunden. Neben der reinen Vermittlungsfunktion von IP-Paketen, die in die jeweiligen Zugangsnetze übermittelt werden sollen oder von jeweiligen Zugangsnetzen stammen, können die IP-Router R1 bis R3 jeweils noch über eine Netzzugangsfunktion verfügen. Es ist hierbei auch möglich, dass diese Netzzugangsfunktion von einem mit dem eigentlichen IP-Router verbundenen Netzzugangsserver erbracht wird. Im Sinne dieser Erfindung wird in diesem Fall der IP-Router R1 bis R3 von dem jeweiligen eigentlichen IP-Router und diesem Netzzugangsserver gebildet.

Die IP-Router R4 und R5 sind wie die IP-Router R1 bis R3 ausgeschaltet und sind über einen Netzzugangspunkt POP4 bzw. POP5 mit dem Endgerät TE1 bzw. TE5 verbunden.

Die Verbindungssteuerungs-Server SIPS1, SIPS2 und GK1 bieten innerhalb des IP-Netzes IPN1 einen Dienst an, den Aufbau von VOIP Kommunikationsverbindungen durch das IP-Netz IPN1 zu steuern oder zu unterstützen. Weiter können die Verbindungssteuerungs-Server SIPS1, SIPS2 und GK1 die Adressierung solcher Verbindung unterstützen.

Es ist auch möglich, dass die Verbindungssteuerungs-Server SIPS1, SIPS2 und GK1 innerhalb des IP-Netzes IPN1 einen Dienst anbieten, der den Aufbau von Video- oder Daten-Kommunikationsverbindungen durch das IP-Netz IPN1 steuert oder unterstützt.

Be den Verbindungssteuerungs-Servern SIPS1 und SIPS2 handelt es sich um SIP-Server oder SIP-Proxy-Server (SIP = Session Initiation Protocol). Diese SIP-Server unterstützen und steuern mittels des SIP-Protokolls den Aufbau von Verbindungen durch das IP-Netz IPN1.

Bei dem Verbindungssteuerungs-Server GK1 handelt es sich um einen Gatekeeper nach der ITU-T-Empfehlung H.323. Der Aufbau und die Funktionsweise des Verbindungssteuerungs-Servers GK1 ist beispielsweise in ITU-T, H.323, 11/96 beschrieben.

Es ist auch möglich, dass weitere, andersartige Verbindungssteuerungs-Server in dem IP-Netz IPN1 zur Verfügung stehen. Solche Verbindungssteuerungs-Server können hierbei jegliche Art von Verbindungssteuerung oder Verbindungsunterstützung innerhalb des IP-Netzes IPN1 oder auch netzübergreifend anbieten, durch welche das Einrichten oder die Zuordnung von Bandbreite zu virtuellen Verbindungen durch das IP-Netz IPN1 unterstützt wird.

Es ist natürlich auch möglich, dass das IP-Netz IPN1 über eine andere Zahl von Verbindungssteuerungs-Servern verfügt. Üblicherweise wird das IP-Netz IPN1 hierbei über eine Vielzahl solcher Verbindungssteuerungs-Server verfügen, die unterschiedliche Arten von Verbindungssteuerungs-Diensten innerhalb des IP-Netzes IPN1 anbieten.

Bei dem Gateway GW handelt es sich um eine Gateway zwischen dem Fernsprechnetz PSN1 und dem IP-Netz IPN1, das eine Fernsprechverbindung durch das Fernsprechnetz PSN1 in eine VOIP Kommunikationsverbindung durch das IP-Netz IPN1 überführt. Das Gateway GW umfasst somit Funktionen, die Sprachsignale codieren/ decodieren, komprimieren/ dekomprimieren und einen Datenstrom paketieren/ depaketieren. Das Gateway GW kann beispielsweise nach der ITU-T-Empfehlung H.323 aufgebaut sein. Es ist hierbei vorteilhaft, dass die Funktionen des Gateways GW von einem oder sämtlichen der Verbindungssteuerungs-Server SIPS1, SIPS2 und GK1 gesteuert werden.

Das Kommunikationsnetzes TKN weist weiter einen Abhörserver LIS auf, der mit den Servern LEA1, LEA2 und LEA3 verbunden ist. Bei den Servern LEA1 bis LEA3 handelt es sich um Server, die jeweils einem spezifischen Bedarfsträger zugeordnet sind. Die Server LEA1 bis LEA3 initiieren für den jeweiligen Bedarfsträger das Abhören von Kommunikationsverbindungen, die durch das Kommunikationsnetz TK1 geführt werden. Weiter empfangen die Server LEA1 bis LEA3 von dem Telekommunikationsnetz TKN Daten, die innerhalb Telekommunikationsnetzes TK1 aufgrund der initiieren Abhörung gewonnen worden sind.

Beispielsweise beabsichtigt der Bedarfsträger, dem der Server LEA1 zugeordnet ist, sämtliche Kommunikationsverbindungen abzuhören, an denen der Teilnehmer A beteiligt ist. Bei diesen Kommunikationsverbindungen kann es sich um Sprach-, Daten- und/oder Video-Kommunikationsverbindungen handeln. Der Server LEA1 sendet hierzu eine Abhöranforderung an den Abhörserver LIS, die das Abhören des Teilnehmers A anfordert.

Wenn der Abhörserver LIS diese Abhöranforderung erkennt, bestimmt er mindestens einen dem Teilnehmer A zugeordneten Verbindungssteuerungs-Server. Diesem Verbindungssteuerungs-Server können hierbei unterschiedliche IP-Netze zugeordnet sein. Es ist vorteilhaft, dass der Abhörserver diejenigen Verbindungssteuerungs-Server bestimmt, die den Aufbau von Verbindungen der abzuhörenden Verbindungsart zu oder von dem Teilnehmer A durch ein IP-Netz unterstützen können. Es ist jedoch auch möglich, dass der Abhörserver LIS sämtliche Verbindungssteuerungs-Server eines IP-Netzes des Telekommunikationsnetzes TKN bestimmt.

In diesem Ausführungsbeispiel bestimmt der Abhörserver LIS auf die Abhöranforderung von dem Server LEA1 die Verbindungssteuerungs-Server SIPS1, SIPS2 und GK1, die den Aufbau von VOIP Kommunikationsverbindungen unterstützen.

Weiter bestimmt der Abhörserver LIS, wenn er die Abhöranforderung von dem Server LEA1 erkennt, mindestens eine IP-Router, der für einen Netzzugangspunkt des Teilnehmers A zu dem oder einem der IP-Netze des Kommunikationsnetzes TKN verantwortlich ist. Verantwortlich bedeutet hierbei, dass der Verkehr von oder zu dem Teilnehmer, der über diesen Netzzugangspunkt geführt wird, von dem IP-Router vermittelt wird. Es ist hierbei vorteilhaft, dass der Abhörserver LIS für jedes der IP-Netze des Kommunikationsnetzes TKN die IP-Router bestimmt, die für mögliche Netzzugangspunkte des Teilnehmers A zu dem jeweiligen IP-Netz verantwortlich sind. Im Regelfall ist es jedoch ausreichend, für einen Teilnehmer einen Netzzugangspunkt und damit einen IP-Router zu bestimmen.

In diesem Ausführungsbeispiel bestimmt der Abhörserver LIS auf die Abhöranforderung von dem Server LEA1, die IP-Router R1 bis R4, die für die Netzzugangspunkte POP1 bis POP4 des Teilnehmers A verantwortlich sind.

Der Abhörserver LIS veranlasst nun den mindestens einen bestimmten Verbindungssteuerungs-Server, Verbindungsdaten zu gewinnen, die Kommunikationsverbindungen zugeordnet sind, an denen der Teilnehmer A beteiligt ist.

Der Abhörserver LIS veranlasst so in diesem Ausführungsbeispiel die Verbindungssteuerungs-Server SIPS1, SIPS2 und GK1, Verbindungsdaten zu gewinnen, die Kommunikationsverbindungen zugeordnet sind, an denen der Teilnehmer A beteiligt ist.

Der Abhörserver LIS veranlasst weiter den mindestens einen bestimmten IP-Router, Inhaltsdaten zu gewinnen, die Kommunikationsverbindungen zugeordnet sind, an denen der Teilnehmer A beteiligt ist.

Der Abhörserver LIS veranlasst so in diesem Ausführungsbeispiel die IP-Router R1 bis R4 Inhaltsdaten zu gewinnen, die Kommunikationsverbindungen zugeordnet sind, an denen der Teilnehmer A beteiligt ist.

Es ist auch möglich, dass der Abhörserver LIS die IP Router R1 bis R4 nicht veranlasst, Inhaltsdaten zu gewinnen. Beispielsweise kann in der Abhöranforderung von dem Server LEA1 spezifiziert sein, dass lediglich Verbindungsdaten gewonnen werden sollen.

Die so von Verbindungssteuerungs-Servern und IP-Routern gewonnenen Verbindungs- und Inhaltsdaten können entweder in den jeweiligen Verbindungssteuerungs-Server oder IP-Routern gespeichert werden oder von diesen an den Abhörserver LIS, an andere Elemente des Kommunikationsnetzes TKN, an den Server LEA1 oder an einen von dem Server LEA1 bezeichneten Server übermittelt werden.

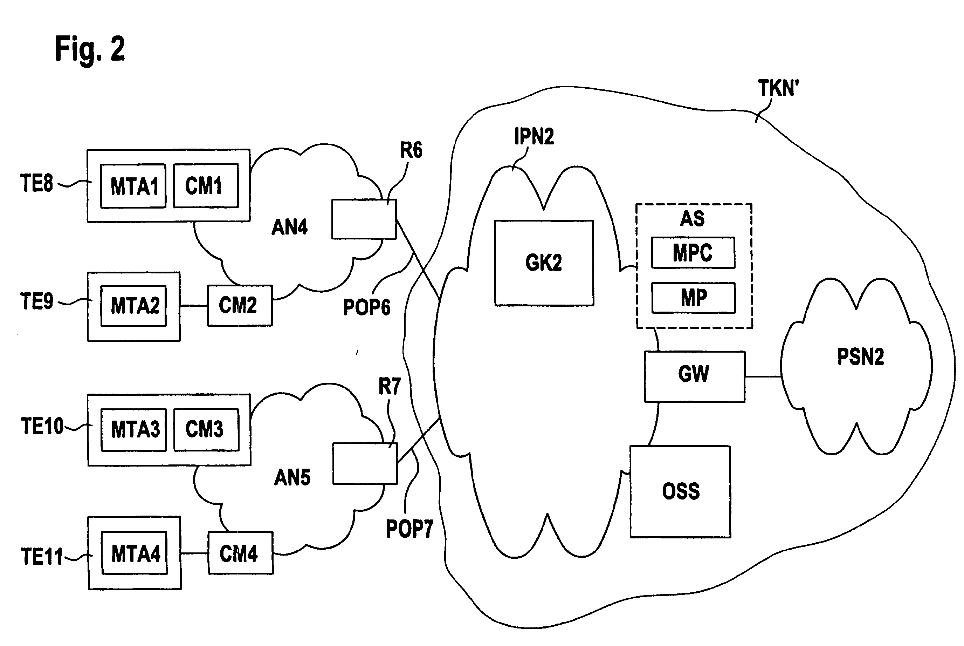

Anhand von Fig. 2 wird ein weiteres Ausführungsbeispiel des Aufbaus eines Kommunikationsnetzes verdeutlicht, bei dem ebenfalls das oben beschriebene Verfahren zum Abhören von Kommunikationsverbindungen zum Einsatz kommen kann.

Fig. 2 zeigt eine Kommunikationsnetz TKN', zwei Zugangsnetze AN4 und AN5, zwei IP-Router R6 und R7, vier Endgeräte TE8 bis TE11 und zwei Modems CM2 und CM4.

Die Endgeräte TE8 und TE10 weisen jeweils eine Nachrichtenübertragungseinheit MTA1 bzw. MTA3 und ein Modem CM1 bzw. CM3 auf. Die Endgeräte TE9 und TE11 weisen jeweils eine Nachrichtenübertragungseinheit MTA2 bzw. MTA4 auf, die über das Modem CM2 bzw. CM4 mit dem Zugangsnetz AN4 bzw. AN5 verbunden ist.

Bei den Nachrichtenübertragungseinheiten MTA1 bis MTA4 handelt es sich um einen MTA-Agenten (MTA = Media Terminal Adapter). Der MTA-Agent stellt die teilnehmerseitigen Funktionen für VOIP-Kommunikationsverbindungen bereit.

Bei den Zugangsnetzen AN4 und AN5 handelt es sich um Hybrid Fiber Coax Netze. Die Modems CM1 bis CM4 stellen Modems zur Übertragung von Daten über diese Art von Zugangsnetzen dar.

Die IP-Router R6 und R7 erbringen die Funktion eines CMTS-Systems (CMTS = Cable Modem Termination System). Sie verfügen einerseits über ein Kabelmodem, mittels dem Daten über das jeweilige Zugangsnetz AN4 bzw. AN5 übertragen werden können. Weiter umfassen sie eine IP-Routing-Funktion, mittels der IP-Pakete in das Kommunikationsnetz TKN' vermittelt werden können und die somit aus Sicht des jeweiligen Zugangsnetzes AN4 bzw. AN5 den Netzzugang in das Kommunikationsnetz TKN' bereitstellen und das jeweilige Zugangsnetz AN4 bzw. AN5 abschließen.

Das Kommunikationsnetz TKN' weist ein IP-Netz IPN2, ein Fernsprechnetz PSN2, ein Netzwerkmanagementsystem OSS, das Gateway GW und einen Sprachserver AS auf. Von den Netzelementen des IP-Netzes IPN2 ist in Fig. 2 beispielhaft ein Verbindungssteuerungs-Server GK2 gezeigt.

Der Verbindungssteuerungs-Server GK2 ist wie der Verbindungssteuerungs-Server GK1 nach Fig. 1 aufgebaut. Das Gateway GW ist wie das Gateway GW nach Fig. 1 aufgebaut.

Der Sprachserver AS stellt Sprachansagen und Ansagetexte innerhalb des IP-Netzes IPN2 zur Verfügung. Er weist als funktionswesentliche Elemente zwei Steuereinheiten MPC und MP auf. Die Steuereinheit MP erfüllt die Funktion eines Media-Players. Dies bedeutet, dass sie in einem bestimmten Datenformat vorliegende Sprachansagen in Sprachsignale konvertiert und somit abspielt. Bei der Steuereinheit MPC handelt es sich um eine Einheit, die mehrere wie die Steuereinheit MP ausgestaltete Steuereinheiten verwaltet. Durch das Zusammenwirken dieser Komponenten erzeugt der Sprachserver AS Sprachansagen, die über VOIP-Kommunikationsverbindungen zu Endgeräten übermittelt werden.

Ein in Fig. 2 nicht gezeigter Abhörserver empfängt beispielsweise von dem Server eines Bedarfsträgers eine Abhöranforderung, die das Abhören eines Teilnehmers anfordert, dem das Endgerät TE8 zugeordnet ist. Das Endgerät TE8 kontaktiert zur Steuerung von VOIP-Kommunikationsverbindungen den Verbindungssteuerungs-Server GK2. Der Abhörserver bestimmt somit den Verbindungssteuerungs-Server GK2 und veranlasst ihn, Verbindungsdaten zu gewinnen, die Kommunikationsverbindungen zugeordnet sind, an denen der Teilnehmer des Endgerätes TE8 beteiligt ist.

Alle IP-Pakete von und zu dem Endgerät TE8, die über das Kommunikationsnetz TKN' übermittelt werden, werden zwingend von dem IP-Router R6 vermittelt. Der IP-Router R6 stellt weiter aus Sicht des Zugangsnetzes AN4 den Netzzugang in das Kommunikationsnetz TKN' bereit. Damit ist der Router R6 ein für den Netzzugang des Teilnehmers des Endgerätes TE8 verantwortlicher IP-Router. Der Abhörserver bestimmt so den IP-Router R6 und veranlasst ihn, Inhaltsdaten zu gewinnen, die Kommunikationsverbindung zugeordnet sind, an denen der Teilnehmer des Endgerätes TE8 beteiligt ist.

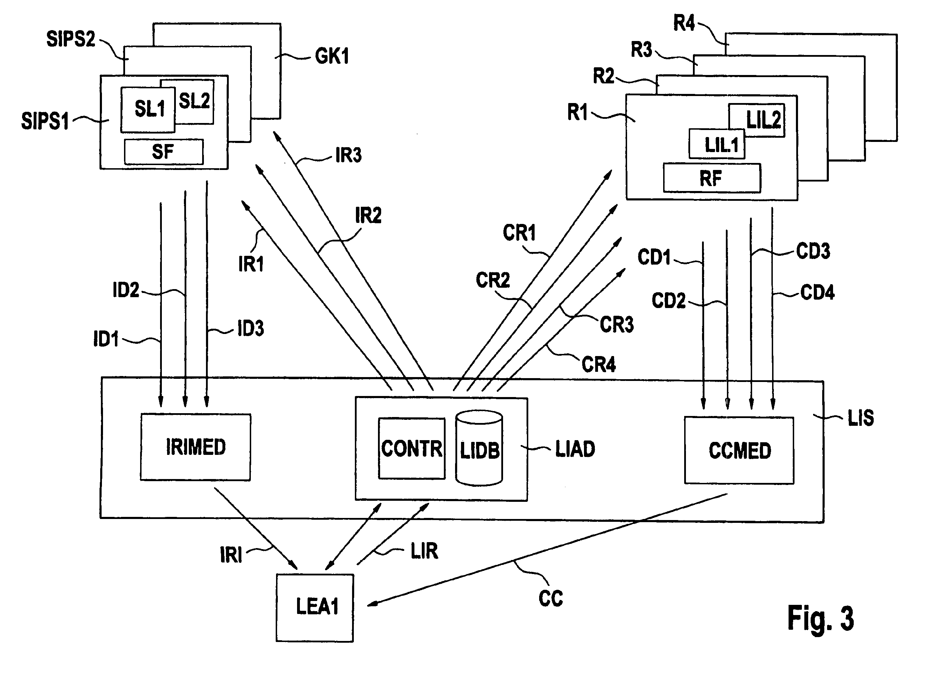

Anhand von Fig. 3 wird nun der detaillierte Ablauf des erfindungsgemäßen Verfahrens und der detaillierte Aufbau eines erfindungsgemäßen Abhörservers, eines erfindungsgemäßen Verbindungssteuerungs-Servers und eines erfindungsgemäßen IP-Routers beispielhaft erläutert.

Fig. 3 zeigt den Server LEA1, den Abhörserver LIS, die Verbindungssteuerungs-Server SIPS1, SIPS2 und GK1, und die IP-Router R1 bis R4. Der Server LEA1, der Abhörserver LIS, die Verbindungssteuerungs-Server SIPS1, SIPS2 und GK1 und die IP-Router R1 bis R4 sind wie die entsprechend benannten Komponenten nach Fig. 1 aufgebaut.

Der Abhörserver LIS wird von ein oder mehreren Rechner und von der auf diesen Rechnern aufsetzenden Software gebildet. Durch den Ablauf dieser Software auf der Hardwareplattform des Abhörservers LIS werden die im folgenden beschriebenen Funktionen des Abhörserver LIS erbracht. Aus funktioneller Sicht weist der Abhörserver LIS hierbei eine Verwaltungsfunktion LIAD und zwei Mediation-Funktionen IRIMED und CCMED auf.

Die Verwaltungsfunktion LIAD wird von einer Steuereinheit CONTR und einer Datenbank LIDB gebildet. Die Steuereinheit CONTR steuert die Funktionen der Verwaltungsfunktion LIAD und wird so von der diese Funktionen steuernden Software gebildet.

Die Verbindungssteuerungs-Server SIPS1, SIPS2 und GK werden jeweils von ein oder mehreren miteinander verbundenen Rechner und der auf diesen Rechnern aufsetzenden Software gebildet. Durch den Ablauf der Software auf der Hardwareplattform der Verbindungssteuerungs-Server SIPS1, SIPS2 und GK1 werden die im folgenden beschriebenen Funktionen der Verbindungssteuerungs-Server SIPS1, SIPS2 und GK1 erbracht. Aus funktioneller Sicht weisen die Verbindungssteuerungs-Server SIIPS1, SIPS2 und GK1 zum einen eine Verbindungssteuerungsfunktionalität auf, die die oben beschriebenen, bekannten Verbindungssteuerungsfunktionen innerhalb des IP-Netzes IPN1 erbringt. Zum anderen weisen sie ein oder mehrere Abhörlogika auf. Es ist hierbei auch möglich, dass die Abhörlogik oder die Abhörlogika jeweils bei Bedarf in den jeweiligen Verbindungssteuerungs-Servern SIPS1, SIPS2 und GK1 geladen werden.

Der funktionelle Aufbau der Verbindungssteuerungs-Server SIPS1, SIPS2 wird im Folgenden beispielhaft anhand des Verbindungssteuerungs-Server SIPS1 erläutert.

Der Verbindungssteuerungs-Server SIPS1 weist eine Verbindungssteuerungsfunktionalität SF und zwei Abhörlogika SL1 und SL2 auf. Die Abhörlogika SL1 und SL2 werden hierbei jeweils von Programmen gebildet, die die weiter unten beschriebenen Funktionen der Abhörlogika SL1 und SL2 bei ihrem Ablauf auf der Hardwareplattform des Dienststeuerungsservers SIPS1 erbringen.

Die IP-Router R1 bis R4 weisen zum einen Hardwarekomponenten auf, die eine IP-Routing-Funktionalität erbringen. Weiter weisen die IP-Router R1 bis R4 ein oder mehrere miteinander verbundene Rechner mit der auf diesen Rechner aufsetzenden Software auf. Wie bereits oben erläutert, ist es hierbei möglich, das die IP-Routing-Funktionalität von diesem Rechner oder diesen Rechnern oder einem Teil dieser Rechner räumlich getrennt angeordnet ist. Es ist weiter möglich, dass die IP-Routing-Funktionalität zum Teil oder ganz softwaremäßig realisiert ist. Beim Ablauf der Software der IP-Router R1 bis R4 auf der Hardwareplattform der IP-Router R1 bis R4 werden die im Folgenden beschriebenen Funktionen der IP-Router R1 bis R4 erbracht. Diese werden im Folgenden beispielhaft anhand des IP-Router R1 erläutert.

Der IP-Router R1 weist eine Steuereinheit RF und ein oder mehrere Abhörlogika auf, von denen in Fig. 3 beispielhaft zwei Abhörlogika LIL1 und LIL2 gezeigt sind.

Die Steuereinheit RF steuert die Vermittlung von IP-Paketen in einem IP-Netz. Sie erbringt somit die oben beschriebenen IP-Routing-Funktionalität. Die Steuereinheit RF erbringt üblicherweise neben der IP-Routing-Funktionalität auch Funktionen zur Bearbeitung der darunter liegenden Kommunikationsprotokolle, beispielsweise Funktionen zur Bearbeitung eines ATM-Protokollstacks. Weiter ist es auch möglich, dass die Steuereinheit RF Kommunikationsprotokolle und Anwendungsprotokolle bearbeitet, die einer über der IP-Kommunikationsschicht liegenden Kommunikationsschicht zugeordnet sind. Weiter erbringt die Steuereinheit RF auch die Bearbeitung von Netzzugangs-Protokollen, mittels denen ein Endgerät Zugang zu dem IP-Netz IPN1 erlangt.

Wenn die Steuereinheit CONTR des Abhörservers LIS eine Abhöranforderung LIR erkennt, die das Abhören eines Teilnehmers anfordert, so bestimmt sie mindestens einen diesem Teilnehmer zugeordneten Verbindungssteuerungs-Server und bestimmt mindestens einen IP-Router, der für einen Netzzugangspunkt dieses Teilnehmers zu einem IP-Netz des Kommunikationsnetzes TKN oder mehreren IP-Netzen des Kommunikationsnetzes TKN verantwortlich ist. Zur Bestimmung dieser Verbindungssteuerungs-Server und dieser IP-Router greift die Steuereinheit CONTR vorzugsweise auf die Datenbank LIDB zu.

Die Datenbank LIDB weist Daten auf, die Verbindungssteuerungs-Server und IP-Router des Kommunikationsnetzes TKN Teilnehmern des Kommunikationsnetzes TNK oder Endgeräten zuordnen, die über das Kommunikationsnetz TKN kommunizieren können. Die Daten der Datenbank LIDB können zum einen von der Steuereinheit CONTR mittels eines try-and-error Verfahrens ermittelt werden. Weiter ist es auch möglich, dass die Steuereinheit CONTR die Daten der Datenbank LIDB mittels Zugriff auf das Netzwerkmanagementsystem des Kommunikationsnetzes TKN ermittelt. Weiter ist es möglich, dass der Abhörserver LIS nicht über die Datenbank LIDB verfügt und die oben beschriebenen Daten direkt mittels Zugriff auf das Netzwerkmanagementsystem des Kommunikationsnetzes TKN ermittelt werden.

Ein Teilnehmer kann in der Abhöranforderung LIR beispielsweise mittels Angabe von ein oder mehreren Adressen gegenüber der Steuereinheit CONTR spezifiziert werden. Adressen können beispielsweise IP Adresse, Telefonnummern, VOIP Telefonnummern, Domain-Namen oder email Adressen sein. Mittels Zugriff auf die Datenbank LIDB, mittels Zugriff auf das Netzwerkmanagementsystem des Kommunikationsnetzes TKN und/oder mittels Zugriff auf einen oder mehrere der Verbindungssteuerungs-Server des Kommunikationsnetzes TKN ermittelt die Steuereinheit CONTR nun diejenigen Verbindungssteuerungs-Server des Kommunikationsnetzes TKN, die IP-Verbindungssteuerungsfunktionen für Verbindung von oder zu dieser Adresse oder diesen Adressen erbringen können. Hierbei ist es vorteilhaft, anhand der Adresse oder den Adressen diejenigen IP-Netze des Kommunikationsnetzes TKN zu bestimmen, über die Verbindungen von oder zu der jeweiligen Kommunikationsadresse geführt werden.

Aus dieser Gruppe von Verbindungssteuerungs-Servern, die möglicherweise Verbindungssteuerungs-Funktionen erbringen können, werden nun diejenigen ausgewählt, die zwingend an der Erbringung eines Verbindungssteuerungsdienstes für eine VOIP Kommunikationsverbindung von oder zu der jeweiligen Adresse oder zu den jeweiligen Adressen beteiligt sind. Wird von der Abhöranforderung LIR das Abhören einer Daten- oder Video-Kommunikationsverbindung angefordert, so werden diejenigen Verbindungssteuerungs-Server ausgewählt, die zwingend an der Erbringung eines Verbindungssteuerungsdienstes für eine Daten- bzw. Video-Kommunikationsverbindung von oder zu der jeweiligen Adresse beteiligt sind.

Es ist hierbei vorteilhaft, verschiedenartige in dem Kommunikationsnetz TKN angebotene Verbindungssteuerungsdienste bei dieser Auswahl zu beachten. Beispielsweise ist es - wie bereits oben geschildert - möglich, Verbindungssteuerungsdienste mittels eines SIP-Servers, SIP-Proxy-Servers oder mittels eines Gatekeepers zu erbringen.

Die wie oben beschrieben ermittelten Verbindungssteuerungs-Server bilden nun die von der Steuereinheit CONTR bestimmten Verbindungssteuerungs-Server. Es ist jedoch auch möglich, dass von der Steuereinheit CONTR alle in dem Kommunikationsnetz TKN vorhandenen Verbindungssteuerungs-Server bestimmt werden. Weiter ist es auch möglich, dass nur ein einzelner Verbindungssteuerungs-Server bestimmt wird. Dieser Verbindungssteuerungs-Server ist beispielsweise der SIP-Proxy-Server, der der jeweiligen Adresse zugeordnet ist.

Es ist auch möglich, dass die "Zuständigkeit" eines Verbindungssteuerungs-Servers für einen Teilnehmer oder ein Endgerät wechselt. Dies kann beispielweise der Fall sein, wenn ein Endgerät über ein Funknetz mit dem Kommunikationsnetz TKN verbunden ist und der zuständige Verbindungssteuerungs-Server abhängig von dem jeweiligen Funknetzbereich ist, in dem sich das Endgerät zu dem jeweiligen Zeitpunkt befindet. In einem solchen Fall ist es vorteilhaft, folgendes Verfahren durchzuführen:

Erkennt die Abhörlogik SL1, dass die Zuständigkeit für den überwachten Teilnehmer auf einen anderen Verbindungssteuerungs-Server übergeht, so informiert sie die Steuereinheit LIAD. Die Steuereinheit LIAD bestimmt sodann den neu zuständigen Verbindungssteuerungs-Server und veranlasst ihn, Verbindungsdaten zu gewinnen, die Kommunikationsverbindungen zugeordnet sind, an denen der abzuhörende Teilnehmer beteiligt ist. Alternativ ist es auch möglich, dass die Abhörlogik SL1, wenn sie den Übergang der Zuständigkeit für den überwachten Teilnehmer auf einen anderen Verbindungssteuerungs-Server erkennt, selbst den neu zuständigen Verbindungssteuerungs-Server bestimmt und diesen veranlasst, Verbindungsdaten zu gewinnen, die Kommunikationsverbindungen zugeordnet sind, an denen der abzuhörende Teilnehmer beteiligt ist.

Wenn die Steuereinheit CONTR des Abhörservers LIS die Abhöranforderung LIR von dem Server LEA1 erkennt, bestimmt sie weiter mindestens einen IP-Router, der für einen Netzzugangspunkt des in der Abhöranforderung LIR angegebenen abzuhörenden Teilnehmers zu einem IP-Netz oder zu mehreren IP-Netzen verantwortlich ist.

Werden in der Verbindungsanforderung LIR ein oder mehrere Netzadressen zur Spezifizierung des abzuhörenden Teilnehmers übergeben, so ist es der Steuereinheit CONTR zum einen möglich, mittels Auswertung dieser Netzadressen diejenigen IP-Router des Kommunikationsnetzes TKN zu bestimmen, welche für einen Netzzugangspunkt des Teilnehmers zu einem der IP-Netze des Kommunikationsnetzes TKN verantwortlich ist. Weiter ist es möglich, dass die Steuereinheit zur Bestimmung dieser IP-Router auf die Datenbank LIDB, auf das Netzwerkmanagementsystem des Kommunikationsnetzes TKN und/ oder auf IP-Router des Kommunikationsnetzes TKN zugreift. Hierbei kann die Steuereinheit CONTR in analoger Weise wie bei der Bestimmung der Verbindungssteuerungs-Server vorgehen. Als IP-Router, die für einen Netzzugangspunkt des abzuhörenden Teilnehmers zu einem IP-Netz des Kommunikationsnetzes TKN verantwortlich sind, zählen hierbei sämtliche IP-Router, über die zwingend IP-Pakete von oder zu einer der Netzadressen des abzuhörenden Teilnehmers geführt werden müssen. Vorzugsweise sind diese diejenigen IP-Router die mit einer Netzzugangs-Funktionalität ausgestattet sind und somit Funktionen wie die Identifizierung des Teilnehmers ausführen.

Die Mediationfunktionen IRIMED und CCMED übermitteln von Verbindungssteuerungs-Servern bzw. von IP-Routern des Kommunikationsnetzes TKN empfangene Verbindungsdaten bzw. Inhaltsdaten an einen oder mehrere der Server LEA1 bis LEA3. Die Mediationfunktionen IRIMED und CCMED können hierbei auch weitere Funktionen wie die Wandlung der Datenstruktur oder die Zwischenspeicherung dieser Daten übernehmen.

Es ist auch möglich, dass der Abhörserver LIS nicht über die Mediationfunktionen IRIMED und CCMED verfügt oder dass diese Mediationfunktionen räumlich verteilt von der Verwaltungsfunktion LIAD erbracht werden.

Die Steuereinheit CONTR veranlasst nun den oder die bestimmten Verbindungssteuerungs-Server, Verbindungsdaten zu gewinnen, die Kommunikationsverbindungen zugeordnet sind, an denen der in der Abhöranforderung LIR spezifizierte abzuhörende Teilnehmer beteiligt ist. Dies kann hierbei dadurch geschehen, dass die Steuereinheit CONTR eine Steuernachricht an den oder die bestimmten Verbindungssteuerungs-Server sendet, die eine bereits in diesen Verbindungssteuerungs-Servern befindliche Abhörlogik aktiviert. Hierbei ist es vorteilhaft, dass in dieser Steuernachricht der abzuhörende Teilnehmer spezifiziert ist. Beispielsweise sendet die Steuereinheit CONTR drei Steuernachrichten IR1, IR2 und IR3 an die von ihr bestimmten Verbindungssteuerungs-Server SIPS1, SiPS2 bzw. GK1. Diese aktivieren jeweils eine in dem jeweiligen Verbindungssteuerungs-Server befindliche Abhörlogik, beispielsweise die Abhörlogik SL1 des Verbindungssteuerungs-Servers SIPS1.

Weiter ist es möglich, dass die Steuereinheit CONTR die Gewinnung der Verbindungsdaten dadurch veranlasst, dass er eine Abhörlogik in den oder die bestimmten Verbindungssteuerungs-Server lädt. So ist es beispielsweise möglich, dass die Steuereinheit CONTR ein Programm, das die Abhörlogik SL2 bildet, in den Verbindungssteuerungs-Server SIPS1 lädt, wo es automatisch installiert und ausgeführt wird. Es ist jedoch auch möglich, die beiden oben beschriebenen Verfahren miteinander zu verknüpfen und somit Abhörlogika bei Bedarf in Verbindungssteuerungs-Server zu laden und ansonsten eine Aktivierung durch eine entsprechende Steuernachricht auszuführen.

In den Steuernachrichten IR1 bis IR3 sind jeweils spezielle Filterkriterien spezifiziert, mittels denen VOIP Kommunikationsverbindungen, an denen der abzuhörende Teilnehmer beteiligt ist, erkannt werden können. Solche Filterkriterien können aber bereits auch in einer von der Steuereinheit CONTR in einen Verbindungssteuerungs-Server geladenen Dienstelogik implementiert sein.

Die Steuereinheit CONTR des Abhörserver LIS veranlasst weiter den oder die bestimmten IP-Router Inhaltsdaten zu gewinnen, die Kommunikationsverbindungen zugeordnet sind, an denen der in der Abhöranforderung LIR spezifizierte abzuhörende Teilnehmer beteiligt ist.

Hierbei ist es zum einen möglich, dass die Steuereinheit CONTR einen bestimmten IP-Router zur Gewinnung von Inhaltsdaten veranlasst, indem sie eine in dem jeweiligen IP-Router befindliche Abhörlogik aktiviert. Ebenso ist es möglich, dass sie hierzu eine Abhörlogik in den oder in die bestimmten IP-Router lädt.

In analoger Anwendung des bereits oben erläuterten sendet die Steuereinheit CONTR beispielsweise Steuernachrichten CR1 bis CR4 zu den bestimmten IP-Routern R1, R2, R3 bzw. R4. Die Steuernachricht CR1 aktiviert beispielsweise die auf dem IP-Router R1 vorhandene Dienstelogik IL1. Auch hier ist es sinnvoll, dass in den Steuernachrichten CR1 bis CR4 Filterkriterien für die Erkennung von VOIP Kommunikationsverbindungen spezifiziert sind, an denen der abzuhörende Teilnehmer beteiligt ist.

Die Abhörlogika SL1 und SL2 gewinnen VOIP Verbindungsdaten, die Kommunikationsverbindungen zugeordnet sind, an denen ein oder mehrere von dem Abhörserver bestimmte Teilnehmer beteiligt sind. Diese Gewinnung von Verbindungsdaten wird hierbei durch einen Abhörserver veranlasst, der den Verbindungssteuerungs-Server SIPS1 auf eine Abhöranforderung, die das Abhören eines Teilnehmers anfordert, als ein dem Teilnehmer zugeordneten Verbindungssteuerungs-Server bestimmt hat.

Die Dienstlogika SL1 und SL2 kommunizieren beispielsweise mit der Steuereinheit SF über eine SIPCGI-Schnittstelle (SIPCGI = SIP Common Gate Interface). Weiter ist es möglich, dass die Dienstlogika SL1 und SL2 als Script realisiert sind, das in der CPL-Sprache (CPL = Call Processing Language) spezifiziert ist und das in dieser Form von der Steuereinheit SF interpretiert wird. Der normale Ablauf einer VOIP Kommunikationsverbindung, die von dem Verbindungssteuerungs-Server SIPS1 gesteuert wird, bleibt unverändert, obwohl über die Schnittstelle oder das API (Application Program Interface) alle notwendigen Daten an die für den Teilnehmer nicht sichtbare Abhörlogik übergeben werden.

Hierzu ist es vorteilhaft, dass die Abhörlogik SL1 mittels eines in der Steuereinheit SF vorhandenen Flags aktiviert wird, das anzeigt, dass eine bestimmte Abhörlogik gestartet werden soll.

Es ist hierbei vorteilhaft, die Neutralität dieses Flags zu wahren. Der Teilnehmer darf nicht erkennen, dass eine Servicelogik gestartet wird, die beispielsweise von der Abhörlogik SL1 oder SL2 gebildet wird. Dieses Flag entspricht dem DTP des IN (DTP = Trigger Detection Point). Eine mögliche Realisierung besteht hierin, dass sämtliche Verbindungswünsche von der Servicelogik beantwortet werden müssen und dass so die Abhörlogik SL1 für jeden von dem Verbindungssteuerungs-Server SIPS1 gesteuerten Verbindungsaufbau getriggert wird. Sobald die Abhörlogik SL1 getriggert wird, filtert sie Verbindungsdaten aufgrund von von dem Abhörserver bestimmten Filterkriterien.

Verbindungsdaten, die von der Abhörlogik SL1 für gefilterte Kommunikationsverbindungen ermittelt werden, sind beispielsweise an der Kommunikationsverbindung beteiligte Teilnehmer, Dauer der Verbindung, Übertragungsart, beteiligte Netze und Netzelemente.

Die Abhörlogika SL1 und SL2 übermitteln die gewonnen Inhaltsdaten and die Mediationfunktion IRIMED. Die Mediationfunktion IRIMED empfängt so Verbindungsdaten ID1 bis ID3 von den Verbindungssteuerungs-Servern SIPS1, SIPS2 und GK1. Die so empfangenen Verbindungsdaten werden von der Mediationfunktion IRIMED als Verbindungsdaten IRI an den Server LEA1 übermittelt.

Die Abhörlogika LIL1 und LIL2 des IP-Router R1 gewinnen Inhaltsdaten, die Kommunikationsverbindungen zugeordnet sind, an deren ein oder mehrere von dem Abhörserver bestimmte Teilnehmer beteiligt sind., Diese Gewinnung von Inhaltsdaten wird hierbei durch einen Abhörserver veranlasst, der den IP-Router R1 auf eine Abhöranforderung, die das Abhören eines Teilnehmers anfordert, als einen für einen Netzzugangspunkt des Teilnehmers zu einem IP-Netz verantwortlichen IP-Router bestimmt hat.

Hierbei ist es vorteilhaft, dass die Dienstelogik LIL1 für die Gewinnung von Inhaltsdaten in einem ersten Schritt diejenigen von dem IP-Router vermittelten IP-Pakete ermittelt, die VOIP Kommunikationsverbindungen zugeordnet sind und die von dem IP-Router an den abzuhörenden Teilnehmer gesendet werden oder von dem abzuhörenden Teilnehmer empfangen werden.

Die Zuordnung eines IP-Paketes zu einer VOIP Kommunikationsverbindungen oder zu einer Video- oder Datenkommunikationsverbindung kann hierbei aus der Art des für das jeweilige IP-Paket bearbeitenden Applikationsprogramms sowie aus Parametern dieses Applikationsprogramms bestimmt werden.

Auswahlkriterien sind beispielsweise IP-Adressen, Port-Nummern, und die Verwendung des RTP-Protokolls (RTP = Realtime Protocol), SIP Protokolls oder H.323 Protokolls. Das SIP Protokoll und das H.323 Protokoll sind zwar für die Kommunikation zwischen einem Endgerät und einem Netzserver gedacht, können jedoch auch für eine End-zu-End VOIP Kommunikation zwischen zwei Endgeräten verwendet werden. Innerhalb des RTP Protokolls ist angegeben, für welche Art von Kommunikationsverbindung das RTP Protokoll verwendet wird. So kann Parametern dieses Protokolls entnommen werden, ob es sich um eine Sprach- oder Video-Kommunikationsverbindung handelt und von welcher Qualität die Kommunikationsverbindung ist. Aus der Art des verwendeten Protokolls und aus diesen Parametern können die Abhörlogika LIL1 und LIL2 somit bestimmen, ob es sich um eine VOIP-, Video- oder Daten-Kommunikationsverbindung handelt.

Sprache in IP basierten Netzen wird in Paketen mittels des RTP-Protokolls über UDP und IP übertragen (UDP = User Datagram Protocol). Jedes RTPoder UDP-Paket kann im Kommunikationsnetz TKN einen anderen Weg zurücklegen. Der einzige Punkt, den alle Sprach-Datenpakete passieren müssen, ist der Eintrittspunkt des Teilnehmers in das IP-Netz. Wie ein Firewall überprüft die Dienstelogik LIL1 alle Pakete, die den Router R1 passieren. Im Gegensatz zu einem Firewall, wo bestimmte IP-Ports gesperrt werden, geht die Abhörlogik LIL1 differenzierter vor. Kriterien neben IP-Adresse, Port-Nummer (je Gesprächsrichtung) und Applikationsprotokoll können weiter Parameter des Applikationsprogramms, also des RTP-Protokolls, sein. Diese Parameter geben beispielsweise Auskunft über die Art der Payload, d.h. Sprache, Codierung usw. Mittels dieser Parameter bestimmt die Dienstelogik LIL1, ob ein Datenpaket einer VOIP Kommunikationsverbindung zugeordnet ist, an der ein von dem Abhörserver spezifizierter Teilnehmer beteiligt ist. Es ist hierbei der Abhörlogik LIL1 auch möglich, getarnte VOIP Kommunikationsverbindungen zu erkennen. So ist es auch möglich, direkte End-zu-End-Verbindungen zu erkennen, die nicht mittels eines Verbindungssteuerungs-Servers aufgebaut oder von einem solchen unterstützt werden. Inhaltsdaten solcher getarnten VOIP Kommunikationsverbindungen werden in gleicher Weise gewonnen. Weiter ist es auch möglich, dass in einem solchen Fall auch Verbindungsdaten von der Abhörlogik LIL1 gewonnen werden.

Die Abhörlogika LIL1 und LIL2 erstellen eine Kopie der von ihnen ermittelten IP-Pakete und übermitteln diese Kopien an die Mediationfunktion CCMED des Abhörservers LIS als gewonnene Inhaltsdaten abzuhörender Kommunikationsverbindungen. Die Mediationfunktion CCMED empfängt so Inhaltsdaten CD1 bis CD4 von den IP-Routern R1 bis R4. Die so empfangenen Inhaltsdaten werden von der Mediationfunktion CCMED als Inhaltsdaten CC an den Server LEA1 übermittelt.

Es ist auch möglich, dass die IP-Router R1 bis R4 nicht von der Steuereinheit CONTR bestimmt werden und veranlasst werden, Daten zu gewinnen. Es ist auch möglich, dass diese Funktionen der Steuereinheit CONTR in den Abhörlogika der von der Steuereinheit CONTR bestimmten Verbindungssteuerungs-Servern angeordnet ist. In diesem Fall wird folgendes, zweischrittiges Verfahren durchgeführt:

Zuerst werden von der Steuereinheit CONTR auf die Abhöranforderung LIR ein oder mehrere Verbindungssteuerungs-Server bestimmt und diese Verbindungssteuerungs-Server veranlasst, Verbindungsdaten über den abzuhörenden Teilnehmer zu gewinnen. Weiter wird der oder die bestimmten Verbindungssteuerungs-Server veranlasst, jeweils ein oder mehrere IP-Router zu bestimmen, die für einen Netzzugangspunkt des abzuhörenden Teilnehmers zu einem IP-Netz verantwortlich sind. Diese von den Verbindungssteuerungs-Server bestimmten IP-Router werden sodann von den bestimmten Verbindungssteuerungs-Server veranlasst, Inhaltsdaten zu gewinnen, die Kommunikationsverbindungen zugeordnet sind, an denen der abzuhörende Teilnehmer beteiligt ist.

Bei der Gewinnung von Inhaltsdaten und Verbindungsdaten ist eine Kommunikation zwischen Verbindungssteuerungs-Server und zugeordneten IP-Routern, d.h. zwischen dem Verbindungssteuerungs-Server und dem oder den von diesem bestimmten IP-Routern, möglich. Eine solche Kommunikation ist insbesondere vorteilhaft, um getarnte VOIP Verbindungen zu detektieren und synchronisierte Verbindungsdaten und Inhaltsdaten an den Abhörserver LIS zu übermitteln.

## Patentansprüche

1. Verfahren zum Abhören von Kommunikationsverbindungen zwischen zwei und mehr Teilnehmer (A bis D) eines Kommunikationsnetzes (TKN), das ein oder mehrere IP-Netze (IPN1, IPN2) aufweist, wobei mindestens ein IP-Router (R1 bis R4) bestimmt wird, der für einen Netzzugangspunkt (POP1 bis POP4) des abzuhörenden Teilnehmers (A) zu dem IP-Netz (IPN1) oder den IP-Netzen verantwortlich ist und wobei der mindestens eine bestimmte IP-Router (R1 bis R4) veranlasst wird, Inhaltsdaten (CD1 bis CD4) zu gewinnen, die Kommunikationsverbindungen zugeordnet sind, an denen der abzuhörende Teilnehmer (A) beteiligt ist
**dadurch gekennzeichnet, dass** ein Abhörserver (LIS), wenn er eine Abhöranforderung (LIR) erkennt, die das Abhören eines der Teilnehmer (A) anfordert, mindestens einen dem Teilnehmer zugeordneten Verbindungssteuerungs-Server (SIPS1, SIPS2, GK1) bestimmt, und dass der Abhörserver (LIS) den mindestens einen bestimmten Verbindungssteuerungs-Server (SIPS1, SIPS2, GK1) veranlasst, Verbindungsdaten (ID1 bis ID3) zu gewinnen, die Kommunikationsverbindungen zugeordnet sind, an denen der Teilnehmer (A) beteiligt ist.

2. Verfahren nach Anspruch 1, **dadurch gekennzeichnet, dass** der Abhörserver (LIS) den mindestens einen IP-Router (R1 bis R4) bestimmt und veranlasst, Inhaltsdaten (CD1 bis CD4) zu gewinnen.

3. Verfahren nach Anspruch 1, **dadurch gekennzeichnet, dass** der mindestens eine bestimmte Verbindungssteuerungs-Server (SIPS1, SIPS2, GK1) den mindestens einen IP-Router (R1 bis R4) bestimmt und veranlasst, Inhaltsdaten (CD1 bis CD4) zu gewinnen.

4. Verfahren nach Anspruch 1, **dadurch gekennzeichnet, dass** der Abhörserver (LIS) einen bestimmten Verbindungssteuerungs-Server (SIPS1, SIPS2, GK1) veranlasst, Verbindungsdaten (ID1 bis ID3) zu gewinnen, indem er eine in dem Verbindungssteuerungs-Server (SIPS1, SIPS2, GK1) befindliche Abhörlogik (SL1 bis SL3) aktiviert.

5. Verfahren nach Anspruch 1, **dadurch gekennzeichnet, dass** der Abhörserver (LIS) einen bestimmten Verbindungssteuerungs-Server (SIPS1, SIPS2, GK1) veranlasst, Verbindungsdaten (ID1 bis ID3) zu gewinnen, indem er eine Abhörlogik (SL1 bis SL3) in den Verbindungssteuerungs-Server (SIPS1, SIPS2, GK1) lädt.

6. Verfahren nach Anspruch 4 oder Anspruch 5, **dadurch gekennzeichnet, dass** die Abhörlogik (SL1 bis SL3) für jeden von dem Verbindungssteuerungs-Server (SIPS1, SIPS2, GK1) gesteuerten Verbindungsaufbau getriggert wird und, sobald sie getriggert wird, Verbindungsdaten aufgrund von von dem Abhörserver (LIS) bestimmten Filterkriterien filtert.

7. Verfahren nach Anspruch 1, **dadurch gekennzeichnet, dass** ein bestimmter IP-Router (R1 bis R4) veranlasst wird, Inhaltsdaten (CD1 bis CD4) zu gewinnen, indem eine in dem IP-Router (R1 bis R4) befindliche Abhörlogik (LIL1 bis LIL4) aktiviert wird.

8. Verfahren nach Anspruch 1, **dadurch gekennzeichnet, dass** ein bestimmter IP-Router (R1 bis R4) veranlasst wird, Inhaltsdaten (CD1 bis CD4) zu gewinnen, indem eine Abhörlogik (LIL1 bis LIL4) in den IP-Router (R1 bis R4) geladen wird.

9. Abhörserver (LIAD) zur Unterstützung des Abhörens von Kommunikationsverbindungen zwischen zwei und mehr Teilnehmer (A bis D) eines Kommunikationsnetzes (TKN), das ein oder mehrere IP-Netze (IPN1, IPN2) aufweist,
**dadurch gekennzeichnet, dass** der Abhörserver (LIS) mit einer Steuereinheit (CONTR) versehen ist, die so ausgestaltet ist, dass sie, wenn sie eine Abhöranforderung (LIR) erkennt, die das Abhören eines der Teilnehmer (A) anfordert, mindestens einen dem Teilnehmer (A) zugeordneten Verbindungssteuerungs-Server (SIPS1, SIPS2, GK1) bestimmt, und dass die Steuereinheit (CONTR) weiter so ausgestaltet ist, dass sie den mindestens einen bestimmten Verbindungssteuerungs-Server (SIPS1, SIPS2, GK1) veranlasst, Verbindungsdaten (ID1 bis ID3) zu gewinnen, die Kommunikationsverbindungen zugeordnet sind, an denen der Teilnehmer (A) beteiligt ist.

10. Abhörserver (LIAD) nach Anspruch 9, **dadurch gekennzeichnet, dass** die Steuereinheit (CONTR) weiter so ausgestaltet ist, daß sie mindestens einen IP-Router (R1 bis R4) bestimmt, der für einen Netzzugangspunkt (POP1 bis POP4) des Teilnehmers (A) zu dem IP-Netz (IPN1) oder den IP-Netzen verantwortlich ist, und dass die Steuereinheit (CONTR) weiter so ausgestaltet ist, dass sie den mindestens einen bestimmten IP-Router (R1 bis R4) veranlasst, Inhaltsdaten (CD1 bis CD4) zu gewinnen, die Kommunikationsverbindungen zugeordnet sind, an denen der Teilnehmer (A) beteiligt ist.

11. Verbindungssteuerungs-Server (SIPS1, SIPS2, GK1) für Kommunikationsverbindungen, wobei der Verbindungssteuerungs-Server (SIPS1, SIPS2, GK1) mit einer Steuereinheit (SF) zur Steuerung von Kommunikationsverbindungen in einem IP-Netze (IPN1, IPN2) versehen ist, **dadurch gekennzeichnet, dass** der Verbindungssteuerungs-Server (SIPS1, SIPS2, GK1) mit einer Abhörlogik (SL1, SL2) versehen ist, die so ausgestaltet ist, dass sie, veranlasst durch einen Abhörserver (LIS), der den Verbindungssteuerungs-Server (SIPS1, SIPS2, GK1) auf eine Abhöranforderung (LIR), die das Abhören eines Teilnehmers (A) anfordert, als ein dem Teilnehmer zugeordneter Verbindungssteuerungs-Server (SIPS1, SIPS2, GK1) bestimmt hat, Verbindungsdaten (ID1 bis ID3) gewinnt, die Kommunikationsverbindungen zugeordnet sind, an denen ein oder mehrere von dem Abhörserver (LIS) bestimmte Teilnehmer (A) beteiligt sind.

12. Verbindungssteuerungs-Server nach Anspruch 11, **dadurch gekennzeichnet, dass** die Abhörlogik weiter so ausgestaltet ist, daß sie mindestens einen IP-Router (R1 bis R4) bestimmt, der für einen Netzzugangspunkt (POP1 bis POP4) des Teilnehmers (A) zu dem IP-Netz (IPN1) oder den IP-Netzen verantwortlich ist, und dass die Abhörlogik weiter so ausgestaltet ist, dass sie den mindestens einen bestimmten IP-Router (R1 bis R4) veranlasst, Inhaltsdaten (CD1 bis CD4) zu gewinnen, die Kommunikationsverbindungen zugeordnet sind, an denen der Teilnehmer (A) beteiligt ist.

13. IP-Router (R1 bis R4), wobei der IP-Router (R1 bis R4) mit einer Steuereinheit (RF) zur Steuerung der Vermittlung von IP-Paketen in einem IP-Netze (IPN1, IPN2) versehen ist,
**dadurch gekennzeichnet, dass** der IP-Router (R1 bis R4) mit einer Abhörlogik (SL1, SL2) versehen ist, die so ausgestaltet ist, dass sie, veranlasst durch einen Abhörserver (LIS), der den IP-Router (R1 bis R4) auf eine Abhöranforderung (LIR), die das Abhören eines Teilnehmers (A) anfordert, als einen für einen Netzzugangspunkt (POP1 bis POP4) des Teilnehmers (A) zu dem IP-Netz (IPN1) verantwortlichen IP-Router (R1 bis R4) bestimmt hat, Inhaltsdaten (CD1 bis CD4) gewinnt, die Kommunikationsverbindungen zugeordnet sind, an denen ein oder mehrere von dem Abhörserver (LIS) bestimmte Teilnehmer (A) beteiligt sind.

14. IP-Router (R1 bis R4) nach Anspruch 13, **dadurch gekennzeichnet, dass** die Abhörlogik (SL1, SL2) weiter so ausgestaltet ist, dass sie für die Gewinnung von Inhaltsdaten diejenigen von dem IP-Router (R1 bis R4) vermittelten IP-Pakete ermittelt, die Kommunikationsverbindungen zugeordnet sind und die von dem IP-Router (R1 bis R4) an den Teilnehmer gesendet werden oder von dem Teilnehmer empfangen werden.

15. IP-Router (R1 bis R4) nach Anspruch 14, **dadurch gekennzeichnet, dass** die Abhörlogik (SL1, SL2) weiter so ausgestaltet ist, dass sie die Zuordnung eines IP-Paketes zu einer Kommunikationsverbindung aus der Art und aus Parametern des für das IP-Paket bearbeiteten Applikationsprogramms bestimmt.

16. IP-Router (R1 bis R4) nach Anspruch 14, **dadurch gekennzeichnet, dass** die Abhörlogik (SL1, SL2) weiter so ausgestaltet ist, dass sie die von ihr ermittelten IP-Pakete kopiert und die Kopien an den Abhörserver (LIS) übermittelt.

## Claims

1. A method of monitoring communication connections between two or more users (A to D) of a communication network (TKN) comprising one or more IP networks (IPN1, IPN2), at least one IP router (R1 to R4) being specified which is responsible for one network access point (POP1 to POP4) of the user (A) to be monitored to the IP network (IPN1) or the IP networks and the at least one specified IP router (R1 to R4) being prompted to obtain content data (CD1 to CD4) associated with communication connections in which the user (A) to be monitored is involved,
**characterised in that** a monitoring server (LIS), when it detects a monitoring request (LIR), which requests monitoring of one of the users (A), specifies at least one connection control server (SIPS1, SIPS2, GK1) assigned to the user, and **in that** the monitoring server (LIS) prompts the at least one specified connection control server (SIPS1, SIPS2, GK1) to obtain connection data (ID1 to ID3) associated with communication connections in which the user (A) is involved.

2. A method according to claim 1, **characterised in that** the monitoring server (LIS) specifies the at least one IP router (R1 to R4) and prompts it to obtain content data (CD1 to CD4).

3. A method according to claim 1, **characterised in that** the at least one specified connection control server (SIPS1, SIPS2, GK1) specifies the at least one IP router (R1 to R4) and prompts it to obtain content data (CD1 to CD4).

4. A method according to claim 1, **characterised in that**, by activating a monitoring logic circuit (SL1 to SL3) located in the connection control server (SIPS1, SIPS2, GK1), the monitoring server (LIS) prompts a specified connection control server (SIPS1, SIPS2, GK1) to obtain connection data (ID1 to ID3).

5. A method according to claim 1, **characterised in that**, by loading a monitoring logic circuit (SL1 to SL3) into the connection control server (SIPS1, SIPS2, GK1), the monitoring server (LIS) prompts a specified connection control server (SIPS1, SIPS2, GK1) to obtain connection data (ID1 to ID3).

6. A method according to claim 4 or claim 5, **characterised in that** the monitoring logic circuit (SL1 to SL3) is triggered for each connection set-up controlled by the connection control server (SIPS1, SIPS2, GK1) and, as soon as it is triggered, filters connection data on the basis of filter criteria specified by the monitoring server (LIS).

7. A method according to claim 1, **characterised in that** a specified IP router (R1 to R4) is prompted to obtain content data (CD1 to CD4) by activation of a monitoring logic circuit (LIL1 to LIL4) located in the IP router (R1 to R4).

8. A method according to claim 1, **characterised in that** a specified IP router (R1 to R4) is prompted to obtain content data (CD1 to CD4) by loading of a monitoring logic circuit (LIL1 to LIL4) into the IP router (R1 to R4).

9. A monitoring server (LIAD) for assisting in monitoring communication connections between two or more users (A to D) of a communication network (TKN) comprising one or more IP networks (IPN1, IPN2),
**characterised in that** the monitoring server (LIS) is provided with a control unit (CONTR), which is configured such that, when it detects a monitoring request (LIR) requesting monitoring of one of the users (A), it specifies at least one connection control server (SIPS1, SIPS2, GK1) assigned to the user (A), and **in that** the control unit (CONTR) is further configured such that it prompts the at least one specified connection control server (SIPS1, SIPS2, GK1) to obtain connection data (ID1 to ID3) assigned to communication connections in which the user (A) is involved.

10. A monitoring server (LIAD) according to claim 9, **characterised in that** the control unit (CONTR) is further configured such that it specifies at least one IP router (R1 to R4) which is responsible for a network access point (POP1 to POP4) of the user (A) to the IP network (IPN1) or the IP networks, and **in that** the control unit (CONTR) is further configured such that it prompts the at least one specified IP router (R1 to R4) to obtain content data (CD1 to CD4) associated with communication connections in which the user (A) is involved.

11. A connection control server (SIPS1, SIPS2, GK1) for communication connections, the connection control server (SIPS1, SIPS2, GK1) being provided with a control unit (SF) for controlling communication connections in an IP network (IPN1, IPN2), **characterised in that** the connection control server (SIPS1, SIPS2, GK1) is provided with a monitoring logic circuit (SL1, SL2) which is configured such that it obtains connection data (ID1 to ID3) associated with communication connections in which one or more users (A) specified by the monitoring server (LIS) are involved when prompted by a monitoring server (LIS), which has specified the connection control server (SIPS1, SIPS2, GK1) as a connection control server (SIPS1, SIPS2, GK1) assigned to a user (A) in response to a monitoring request (LIR) requesting monitoring of the user.

12. A connection control server according to claim 11, **characterised in that** the monitoring logic circuit is further configured such that it specifies at least one IP router (R1 to R4) which is responsible for a network access point (POP1 to POP4) of the user (A) to the IP network (IPN1) or the IP networks, and **in that** the monitoring logic circuit is further configured such that it prompts the at least one specified IP router (R1 to R4) to obtain content data (CD1 to CD4) associated with communication connections in which the user (A) is involved.

13. An IP router (R1 to R4), the IP router (R1 to R4) being provided with a control unit (RF) for controlling the routing of IP packets in an IP network (IPN1, IPN2),
**characterised in that** the IP router (R1 to R4) is provided with a monitoring logic circuit (SL1, SL2), which is configured such that it obtains content data (CD1 to CD4) associated with communication connections in which one or more of the users (A) specified by the monitoring server (LIS) are involved when prompted by a monitoring server (LIS), which has specified the IP router (R1 to R4) as an IP router (R1 to R4) responsible for a network access point (POP1 to POP4) of a user (A) to the IP network (IPN1) in response to a monitoring request (LIR) requesting monitoring of the user (A).

14. An IP router (R1 to R4) according to claim 13, **characterised in that** the monitoring logic circuit (SL1, SL2) is further configured such that, for the obtainment of content data, it determines those IP packets routed by the IP router (R1 to R4) which are associated with communication connections and which are sent by the IP router (R1 to R4) to the user or are received from the user.

15. An IP router (R1 to R4) according to claim 14, **characterised in that** the monitoring logic circuit (SL1, SL2) is further configured such that it specifies the assignment of an IP packet to a communication connection on the basis of the type and parameters of the application program processed for the IP packet.

16. An IP router (R1 to R4) according to claim 14, **characterised in that** the monitoring logic circuit (SL1, SL2) is further configured such that it copies the IP packets determined thereby and transmits the copies to the monitoring server (LIS).

## Revendications

1. Procédé pour écouter les liaisons de communication entre deux abonnés et plus (A à D) d'un réseau de communication (TKN) qui présente un ou plusieurs réseaux IP (IPN1, IPN2), selon lequel on détermine au moins un routeur IP (R1 à R4) qui est responsable d'un point d'accès du réseau (POP1 à POP4) de l'abonné à écouter (A) au réseau IP (IPN1) ou aux réseaux IP et selon lequel on incite l'au moins un routeur IP spécifique (R1 à R4) à acquérir les données de contenus (CD1 à CD4) qui sont associées aux liaisons de communication dans lesquelles l'abonné à écouter (A) est impliqué **caractérisé en ce qu'**un serveur d'écoute (LIS), lorsqu'il détecte une demande d'écoute (LIR) consistant en l'écoute de l'un des abonnés (A), détermine au moins un serveur de contrôle de liaison (SIPS1, SIPS2, GK1) associé à l'abonné, et **en ce que** le serveur d'écoute (LIS) incite l'au moins un serveur de contrôle de liaison spécifique (SIPS1, SIPS2, GK1) à acquérir les données de liaison (ID1 à ID3) qui sont associées aux liaisons de communication dans lesquelles l'abonné (A) est impliqué.

2. Procédé selon la revendication 1, **caractérisé en ce que** le serveur d'écoute (LIS) détermine et incite l'au moins un routeur IP (R1 à R4) à acquérir des données de contenus (CD1 à CD4).

3. Procédé selon la revendication 1, **caractérisé en ce que** l'au moins un serveur de contrôle de liaison spécifique (SIPS1, SIPS2, GK1) détermine et incite l'au moins un routeur IP (R1 à R4) à acquérir des données de contenus (CD1 à CD4).

4. Procédé selon la revendication 1, **caractérisé en ce que** le serveur d'écoute (LIS) incite un serveur de contrôle de liaison spécifique (SIPS1, SIPS2, GK1) à acquérir des données de liaison (ID1 à ID3) en activant une logique d'écoute (SL1 à SL3) située dans le serveur de contrôle de liaison (SIPS1, SIPS2, GK1).

5. Procédé selon la revendication 1, **caractérisé en ce que** le serveur d'écoute (LIS) incite un serveur de contrôle de liaison spécifique (SIPS1, SIPS2, GK1) à acquérir des données de liaison (ID1 à ID3) en activant une logique d'écoute (SL1 à SL3) située dans le serveur de contrôle de liaison (SIPS1, SIPS2, GK1).

6. Procédé selon la revendication 4 ou 5, **caractérisé en ce que** la logique d'écoute (SL1 à SL3) est déclenchée pour chaque établissement de liaison commandé par le serveur de contrôle de liaison (SIPS1, SIPS2, GK1) et filtre les données de liaison sur la base des critères de filtrage déterminés par le serveur d'écoute (LIS), aussitôt qu'elle est déclenchée.

7. Procédé selon la revendication 1, **caractérisé en ce qu'**un routeur IP spécifique (R1 à R4) est incité à acquérir des données de contenus (CD1 à CD4) en activant une logique d'écoute (LIL1 à LIL4) située dans le routeur IP (R1 à R4).

8. Procédé selon la revendication 1, **caractérisé en ce qu'**un routeur IP spécifique (R1 à R4) est incité à acquérir des données de contenus (CD1 à CD4) en chargeant une logique d'écoute (LIL1 à LIL4) dans le routeur IP (R1 à R4).

9. Serveur d'écoute (LIAD) pour assister l'écoute des liaisons de communication entre deux abonnés (A à D) et plus d'un réseau de communication (TKN) qui présente un ou plusieurs réseaux IP (IPN1, IPN2),
**caractérisé en ce que** le serveur d'écoute (LIS) est doté d'une unité de commande (CONTR) qui est formée de sorte qu'elle détermine au moins un serveur de contrôle de liaison (SIPS1, SIPS2, GK1) associé à l'abonné (A), lorsqu'elle détecte une demande d'écoute (LIR) consistant en l'écoute de l'un des abonnés (A), et **en ce que** l'unité de commande (CONTR) est en outre formée de sorte qu'elle incite l'au moins un serveur de contrôle de liaison spécifique (SIPS1, SIPS2, GK1) à acquérir les données de liaison (ID1 à ID3) qui sont associées aux liaisons de communication dans lesquelles l'abonné (A) est impliqué.

10. Serveur d'écoute (LIAD) selon la revendication 9, **caractérisé en ce que** l'unité de commande (CONTR) est en outre formée de sorte qu'elle détermine au moins un routeur IP (R1 à R4) qui est responsable d'un point d'accès du réseau (POP1 à POP4) de l'abonné (A) au réseau IP (IPN1) ou aux réseaux IP, et **en ce que** l'unité de commande (CONTR) est en outre formée de sorte qu'elle incite l'au moins un routeur IP spécifique (R1 à R4) à acquérir les données de contenus (CD1 à CD4) qui sont associées aux liaisons de communication dans lesquelles l'abonné (A) est impliqué.

11. Serveur de contrôle de liaison (SIPS1, SIPS2, GK1) pour les liaisons de communication, le serveur de contrôle de liaison (SIPS1, SIPS2, GK1) étant doté d'une unité de commande (SF) pour commander les liaisons de communication dans un réseau IP (IPN1, IPN2), **caractérisé en ce que** le serveur de contrôle de liaison (SIPS1, SIPS2, GK1) est doté d'une logique d'écoute (SL1, SL2) qui est formée de sorte que, incitée par un serveur d'écoute (LIS) qui a déterminé le serveur de contrôle de liaison (SIPS1, SIPS2, GK1) lors d'une demande d'écoute (LIR) consistant en l'écoute d'un abonné (A) comme serveur de contrôle de liaison (SIPS1, SIPS2, GK1) associé à l'abonné, elle acquiert les données de liaison (ID1 à ID3) qui sont associées aux liaisons de communication dans lesquelles un ou plusieurs abonnés (A) déterminés par le serveur (LIS) sont impliqués.

12. Serveur de contrôle de liaison selon la revendication 11, **caractérisé en ce que** la logique d'écoute est en outre formée de sorte qu'elle détermine au moins un routeur IP (R1 à R4) qui est responsable d'un point d'accès du réseau (POP1 à POP4) de l'abonné (A) au réseau IP (IPN1) ou aux réseaux IP, et **en ce que** la logique d'écoute est en outre formée de sorte qu'elle incite l'au moins un routeur IP spécifique (R1 à R4) à acquérir les données de contenus (CD1 à CD4) qui sont associées aux liaisons de communication dans lesquelles l'abonné (A) est impliqué.

13. Routeur IP (R1 à R4), le routeur IP (R1 à R4) étant doté d'une unité de commande (RF) pour commander la commutation de paquets IP dans un réseau IP (IPN1, IPN2), **caractérisé en ce que** , le routeur IP (R1 à R4) est doté d'une logique d'écoute (SL1, SL2) qui est formée de sorte que, incitée par un serveur d'écoute (LIS) qui a déterminé le routeur IP (R1 à R4) lors d'une demande d'écoute (LIR) consistant en l'écoute d'un abonné (A) comme routeur IP (R1 à R4) responsable d'un point d'accès du réseau (POP1 à POP4) de l'abonné (A) au réseau IP (IPN1), elle acquiert les données de contenus (CD1 à CD4) qui sont associées aux liaisons de communication dans lesquelles un ou plusieurs abonnés (A) déterminés par le serveur d'écoute (LIS) sont impliqués.

14. Routeur IP (R1 à R4) selon la revendication 13, **caractérisé en ce que** la logique d'écoute (SL1, SL2) est en outre formée de sorte qu'elle détermine pour l'acquisition des données de contenus les paquets IP commutés par le routeur IP (R1 à R4) qui sont associés aux liaisons de communication et envoyés à l'abonné par le routeur IP (R1 à R4) ou reçus par l'abonné.

15. Routeur IP (R1 à R4) selon la revendication 14, **caractérisé en ce que** la logique d'écoute (SL1, SL2) est en outre formée de sorte qu'elle détermine l'association d'un paquet IP à une liaison de communication à partir du type et des paramètres du programme d'application traité pour le paquet IP.

16. Routeur IP (R1 à R4) selon la revendication 14, **caractérisé en ce que** la logique d'écoute (SL1, SL2) est en outre formée de sorte qu'elle copie les paquets IP déterminés par elle et transmet les copies au serveur d'écoute (LIS).
